# FASCICULE DE BREVET EUROPEEN

(11) **EP 3 828 707 B1**
(45) Date de publication et mention de la délivrance du brevet: **11.06.2025**
(21) Numéro de dépôt: 20209878.6
(22) Date de dépôt: 25.11.2020
(51) Int. Cl.: G06F 9/50

(54) **PROCÉDÉ D'AFFECTATION DE RESSOURCES EN RÉPONSE À DES REQUÊTES EN FONCTION DE LEUR PRIORITÉ, PROGRAMME D'ORDINATEUR, BLOC DE CONTRÔLE D'AFFECTATION ET SYSTÈME INFORMATIQUE ASSOCIÉS**
VERFAHREN ZUR ZUWEISUNG VON RESSOURCEN ALS ANTWORT AUF ANFRAGEN GEMÄSS IHRER PRIORITÄT, ENTSPRECHENDES COMPUTERPROGRAMM, ENTSPRECHENDER ZUWEISUNGSSTEUERUNGSBLOCK UND ENTSPRECHENDES COMPUTERSYSTEM
METHOD FOR ALLOCATING RESOURCES IN RESPONSE TO REQUESTS ACCORDING TO THEIR PRIORITY, CORRESPONDING COMPUTER PROGRAM, ASSOCIATED CONTROL UNIT FOR ALLOCATION AND COMPUTER SYSTEM

(30) Priorité: 26.11.2019 FR 1913205
(43) Date de publication de la demande: 02.06.2021
(73) Titulaire: THALES, 92400 Courbevoie (FR)
(72) Inventeur: STOECKLIN, William, 92622 GENNEVILLIERS CEDEX (FR); BOUET, Mathieu, 92622 GENNEVILLIERS CEDEX (FR); FAGGION, Nadège, 92622 GENNEVILLIERS CEDEX (FR); REBECCHI, Filippo, 92622 GENNEVILLIERS CEDEX (FR); SCHOLLER, Franck, 92622 GENNEVILLIERS CEDEX (FR)
(74) Mandataire: Lavoix

(56) Documents cités:
- WO-A1-2011/115750
- WO-A1-2019/037626
- US-A1- 2017 357 531

## Description

La présente invention concerne le domaine de l'affectation de ressources en réponse à des requêtes dans un système informatique.

De telles opérations d'affectation sont par exemple mises en œuvre dans les clouds, encore appelés nuages informatiques, notamment dans les modules d'orchestration (encore appelés parfois planificateurs ou séquenceurs) ou de contrôle de clouds, ou encore dans les modules d'orchestration de réseau et d'application ou les modules de gestion d'infrastructure virtualisée.

On connait des documents WO 2019/037626 A1, US 2017/357531 A1 et WO 2011/115750 A1 des procédés d'affectation de ressources en réponse à des requêtes dans un système informatique.

La présente invention concerne, entre autres, un procédé d'affectation de ressources en réponse à des requêtes dans un système informatique comprenant un ensemble de ressources et un bloc de contrôle d'affectation, ledit procédé comprenant les étapes suivantes mises en œuvre par le bloc de contrôle d'affectation :
- réception de requêtes indiquant chacune une opération logicielle à mettre en œuvre et des capacités de ressources sélectivement de type CPU, mémoire de travail, stockage de masse nécessaires à la mise en œuvre de ladite opération ;
- pour chaque requête reçue, détermination de si des ressources en capacité suffisante sont disponibles dans l'ensemble de ressources pour être affectées à la mise en œuvre de ladite opération logicielle et dans le cas positif, affectation desdites ressources à la mise en œuvre de ladite opération.

Dans les systèmes informatiques connus, il n'est pas possible de garantir l'affectation d'une ressource (ressource physique elle-même ou ressource virtuelle correspondant à une virtualisation d'une telle ressource physique) en réponse à une requête requérant une capacité de ressource pour la mise en œuvre d'une opération logicielle quelle qu'en soit l'importance relative pour le bon rendu du service par le système. S'il n'est pas trouvé de ressources pour traiter le besoin, le traitement correspondant est interrompu et un message d'erreur est retourné. Un opérateur doit alors intervenir, si la requête est critique, et libérer manuellement des ressources. Cette situation entraîne des erreurs humaines, des interruptions de services, notamment de services critiques et rend indéterminé le temps de réponse à une requête d'allocation de ressources reçue.

A cet effet, suivant un premier aspect, l'invention propose un procédé d'affectation de ressources selon la revendication 1.

L'invention permet ainsi de garantir l'affectation d'une ressource à une opération logicielle indiquée dans une requête reçue en fonction de la priorité de cette dernière, traduisant sa criticité. Elle permet d'optimiser l'utilisation des ressources, physiques et/ou virtuelles en privilégiant le partage des ressources.

Dans des modes de réalisation, le procédé d'affectation de ressources est selon la revendication 2 ou 3.

Suivant un deuxième aspect, la présente invention propose programme d'ordinateur selon la revendication 4.
Selon un troisième aspect, la présente invention propose un dispositif de contrôle d'affectation de ressources selon la revendication 5.

Dans des modes de réalisation, le dispositif de contrôle d'affectation suivant l'invention est selon la revendication 6 ou 7.

Suivant un quatrième aspect, la présente invention propose un système informatique selon la revendication 8.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 représente une vue schématique d'un système informatique dans un mode de réalisation de l'invention ;
[Fig 2] la figure 2 est un organigramme d'étapes mises en œuvre dans un mode de réalisation de l'invention ;
[Fig 3] la figure 3 est une représentation illustrant un traitement opéré suite à l'émission d'une requête de ressources physiques par une ressource virtuelle du système informatique de la figure 1 dans un mode de réalisation de l'invention.

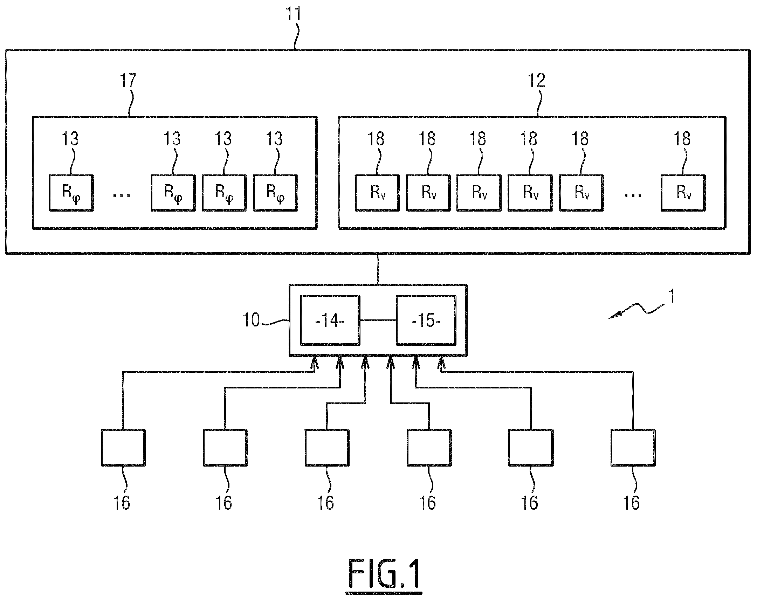

La figure 1 représente un système informatique 1 dans un mode de réalisation de l'invention.

Le système informatique 1 comprend un dispositif électronique de contrôle d'affectation de ressources 10, dit orchestrateur 10, un ensemble 11 de ressources comprenant un ensemble 17 de ressources physiques et un ensemble 12 de ressources virtuelles.

L'ensemble 17 de ressources physiques comprend une pluralité de ressources physiques 13, notées R^{φ}.

L'ensemble 12 de ressources virtuelles comprend une pluralité de ressources virtuelles 18, notées Rv.

Les ressources physiques R^{φ} 13 comprennent des capacités de traitement de données, matérielles et/ou logicielles, parmi l'ensemble des capacités de type calcul (CPU), et/ou de type mémoire de travail, et/ou de type stockage de masse, capacité de calcul pour l'intelligence artificielle (GPU), stockage d'informations secrètes, capacité garantie de communication réseaux, ou tout autre type de ressource nécessaire, etc. Les capacités sont définies par exemple en termes :
- de cycles d'exécution par unité de temps, de nombre de cœurs pour un temps donné, ... pour les capacités de type calcul ;
- d'unités de volume (octets ...), d'opérations de lecture et écriture par unité de temps, pour les capacités de type mémoire et stockage de masse ;
- d'unités de volume sur temps (bit par second), pour les capacités de type communication réseaux.

Les ressources virtuelles Rv 18 sont des briques virtualisées correspondant chacune à des capacités de traitement de données spécifiques des ressources physiques R^{φ} 13 et offrent également des capacités de type calcul (CPU), et/ou de type mémoire de travail, et/ou de type stockage de masse, capacité de calcul pour l'intelligence artificielle (GPU), stockage d'informations secrètes, capacité garantie de communication réseaux ou tout autre type de ressource nécessaire,, etc, définies également par exemple en termes :
- de cycles d'exécution par unité de temps, de nombre de cœurs pour un temps donné, ... pour les capacités de type calcul ;
- d'unités de volume (octets ...), d'opérations de lecture et écriture par unité de temps, pour les capacités de type mémoire et stockage de masse ;
- d'unités de volume sur temps (bit par second), pour les capacités de type communication réseaux.

Les ressources virtuelles sont issues d'une transformation mise en œuvre via une couche d'abstraction appelée hyperviseur et ainsi allouées par l'orchestrateur 10.

Les ressources virtuelles correspondent à une abstraction des ressources physiques disponibles sous la forme d'équipements. Cette abstraction permet une souplesse et une flexibilité dans la gestion des ressources disponibles pour exécuter une opération à l'aide de ces ressources.

Suivant les cas, une ressource physique 13 peut correspondre simplement à une ressource virtuelle 18 (ex. l'espace disque ou si on veut faire une correspondance une à une entre la ressource virtuelle et la physique) ou une ressource physique 13 peut correspondre à plusieurs ressources virtuelles, quand un multiplexage temporel ou fréquentiel est mis en œuvre (ex. un noyau physique correspond à deux ressources virtuelles CPU qui utilisent un cycle du noyau sur deux).

Des requêtes 16 sont reçues par l'orchestrateur 10. Ces requêtes 16 sont émises par des entités, par exemple des administrateurs du système 1 utilisant des logiciels d'exploitation du système 1 ou l'orchestrateur 10, pour créer des opérations logicielles comme des applications, des fonctions réseaux virtuelles, des services de télécommunication (téléphonie ,vidéoconférence, messagerie instantanée ...), des logiciels de bureautique, des logiciels spécialisés par métier , qui comportent des interfaces vers des utilisateurs (individus ou d'autres opérations logicielles) et offrent des services à ces utilisateurs, mais qui sont dépourvues des ressources permettant de mettre effectivement en œuvre l'ensemble de ces services. Les requêtes 16 indiquent une opération logicielle et des besoins en termes de capacité de ressources pour que ces opérations logicielles puissent être exécutées sur le système informatique. Les entités font donc appel à l'orchestrateur 10 lorsqu'elles ont besoin de faire appel à ces ressources, en lui envoyant des requêtes correspondantes.

Chaque allocation de ressource virtuelle 18 effectuée par l'orchestrateur 10 génère des requêtes d'allocation de ressources physiques, parfois de façon chaînée sous le contrôle de l'orchestrateur 10.

Selon l'invention, à chaque requête 16 est associée un niveau de priorité choisi parmi N niveaux de priorité ordonnés hiérarchiquement entre eux de la priorité maximum à la priorité minimum P1, P2, ..., PN. N est un nombre entier supérieur ou égal à deux. Par exemple, N est pris égal à 3 et il existe alors trois niveaux de priorité P1, P2, P3, le niveau P1 étant la priorité maximum et le niveau P3 étant la priorité minimum.

Ces niveaux de priorité permettent ainsi d'ordonner entre elles les requêtes en termes de criticité (par exemple relativement aux utilisateurs, notamment utilisateurs finaux des ressources), d'urgence relative de traitement, d'autorisation à être préemptée et/ou d'autorisation à préempter.

Le niveau de priorité associé à une requête est par exemple celui de l'entité à l'origine de la requête et est alors par exemple défini lors de l'intégration dans le système 1 de l'entité pouvant émettre la requête. Les niveaux de priorité peuvent également être (re)définis lors d'une actualisation du système 1 ou à tout moment.

Typiquement, les ressources physiques 13 sont adaptées pour stocker les programmes applicatifs correspondant aux opérations indiquées dans des requêtes et auxquelles des ressources ont été affectées, pour exécuter ces programmes applicatifs sur des capacités de calcul, pour stocker, dans les capacités de type mémoire ou stockage de masse, les données de travail, les données d'entrée et/ou les données de sortie dans le cadre de ces exécutions.

Dans le mode de réalisation considéré, le système informatique 1 est un réseau de télécommunications ou est au moins une partie d'un tel réseau ou un système d'information.

Les opérations comprennent par exemple des services de type fonctions réseau virtuelles dites VNF (« Virtual Network Function ») qui offrent à des utilisateurs des services par exemple de routage, de pare-feu (« firewall », de sonde DPI (inspection de paquets de données : « Deep Packet Inspection »), un accélérateur de la pile protocolaire TCP et/ou de détection d'intrusion (IDS pour « Intrusion Detection System »).

Une telle opération, par exemple VNF, est typiquement associée à au moins un programme logiciel qui a besoin d'une ou plusieurs ressources virtuelles (et par correspondance, de ressources physiques) de type (au moins) mémoire pour être exécuté. Une opération d'exécution de ce programme pilotée par l'orchestrateur 10 comprend la création d'une nouvelle instance de la VNF, et/ou le lancement de l'exécution de cette instance sur l'ensemble 11 de ressources, le contrôle des instances au cours de leur exécution, l'augmentation des ressources virtuelles associées, le remplacement des ressources virtuelles en cas de pannes... puis la clôture de l'exécution. Une ressource physique peut héberger, en même temps ou en décalé, une ou plusieurs instances d'une VNF donnée, des instances de plusieurs VNF...

L'orchestrateur 10 est adapté pour obtenir un état des capacités maximum de chaque type, par exemple pour chaque ressource physique 13, et un état mis à jour en temps réel des capacités courantes disponibles de chaque type, par exemple pour chacune de ces ressources physiques 13.

L'orchestrateur 10 est adapté pour obtenir un état des capacités maximum de chaque type, par exemple pour chaque ressource virtuelle 18, et un état mis à jour en temps réel des capacités courantes disponibles de chaque type, par exemple pour chacune de ces ressources virtuelles 18.

Dans le cas considéré, l'orchestrateur 10 est également adapté pour maintenir une vision de l'ensemble des instances des VNFs, pour déterminer sur quelle(s) ressource(s) virtuelle(s) 18 lancer l'exécution d'une nouvelle instance d'une VNF (et donc sur quelle(s) ressource(s) physique(s) correspondante(s) 13 lancer cette exécution), comment dimensionner une instance en cours d'exécution, pour indiquer à chaque ressource 13, 18 comment chaîner le cas échéant les fonctions réseau (cf. par exemple certains des traitements tels que spécifiés par le groupe « Network Functions Virtualization » de l'ETSI (ETSI ISG MANO) dans les documents « ETSI GS NFV-MAN 001 V1.1.1 (2014-12) » et « ETSI GS NFV-IFA 009 V1.1.1 (2016-07) » ; dans un mode de réalisation, l'orchestrateur 10 est en outre adapté pour mettre en œuvre un partitionnement temporel et/ou spatial de l'exécution d'instances sur une ressource physique 13.

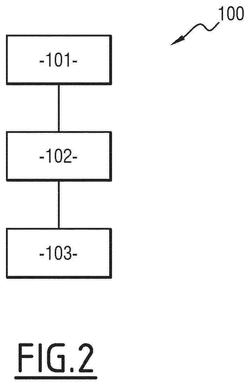

Suivant l'invention, l'orchestrateur 10 est adapté pour recevoir des requêtes d'allocation 16 (par exemple de machine virtuelle ou de logiciels) en provenance d'entités et demandant des ressources virtuelles 18. L'orchestrateur 10 est adapté pour, sur réception d'une nouvelle requête 16, effectuer les étapes de traitement décrites comme incombant à l'orchestrateur 10 ci-dessous en référence à la figure 2. Dans un mode de réalisation, l'orchestrateur 10 comprend un processeur 14 et une mémoire 15. La mémoire 15 comprend des instructions logicielles, qui lorsqu'elles sont exécutées sur le processeur 14, mettent en œuvre automatiquement les étapes incombant à l'orchestrateur 10 décrites en référence à la figure 2.

La figure 2 décrit un ensemble 100 d'étapes mises en œuvre dans un mode de réalisation d'un procédé d'affectation de ressources à des opérations logicielles selon l'invention.

Dans une étape 101, l'orchestrateur 10 reçoit une nouvelle requête 16 en provenance d'une entité, par exemple d'un utilisateur, appelée ci-après requête Req0, requérant l'affectation d'un ou plusieurs types de ressources requises pour la mise en œuvre d'un service à fournir à l'émetteur de cette requête.

Dès réception de cette nouvelle requête, l'orchestrateur 10 détermine en fonction de la requête (et le cas échéant de données complémentaires stockées dans une liste d'informations associées à l'entité ou au service et accessible par l'orchestrateur 10) quel est le type ou les types de ressource nécessaires à cette mise en œuvre, ainsi que la capacité nécessaire pour chaque type de ressource (cette capacité requise peut être faite varier dynamiquement à l'aide de poids relatif affecté à chacune des requêtes en fonction de la charge courante).

Puis l'orchestrateur 10 détermine si une ou des ressources virtuelles 18 dans l'ensemble 12 de ressources virtuelles sont disponibles pour dédier à l'exécution de la requête Req0 la capacité requise pour chaque type de ressource requise.

Dans le cas positif, la ou les ressources virtuelles déterminées comme disponibles en capacité suffisante sont affectées par l'orchestrateur 10 au traitement de l'opération correspondant à la requête Req0 ; l'orchestrateur 10 actualise alors en fonction de cette nouvelle affectation, l'état des capacités courantes disponibles de chaque type pour chacune de ces ressources virtuelles 18 et le traitement requis par Req0 est effectué en utilisant les ressources virtuelles 18 ainsi affectées pour la mise en œuvre de l'opération.

Dans le cas négatif uniquement, l'orchestrateur 10 effectue l'étape 102.

Dans l'étape 102, l'orchestrateur 10 obtient le niveau de priorité (appelé Pₙₒᵤᵥ, égal selon les cas à P1, P2 ou PN) associé à la requête Req0 (ce niveau est par exemple inséré dans un champ de la requête ou alors est déduit de la liste d'informations associée à la requête) et de toutes les autres requêtes précédemment allouées, et détermine si la somme de ressources virtuelles disponibles et de certaines au moins de ressources virtuelles 18 actuellement affectées par l'orchestrateur 10 en réponse à une ou des requêtes de niveau de priorité strictement inférieur à Pₙₒᵤᵥ permet d'atteindre la capacité requise pour chaque type de ressource requise telles qu'indiquée dans la requête.

Si non, l'orchestrateur 10 retourne un message à la requête Req0 indiquant qu'elle ne peut être traitée.

Si oui, l'orchestrateur 10 préempte alors ces ressources virtuelles 18 actuellement affectées à une ou des requêtes de niveau de priorité strictement inférieur à Pₙₒᵤᵥ pour affecter celles qui sont nécessaires (en plus de celles qui étaient disponibles) à l'exécution de la requête Req0, tandis qu'il interrompt l'exécution desdites requêtes. L'exécution de la requête Req0 a alors lieu en utilisant les ressources qui lui ont été affectées par l'orchestrateur 10 pour mettre en œuvre l'opération indiquée dans la requête Req0. Puis l'étape 103 est mise en œuvre.

Dans l'étape 103, l'orchestrateur 10 actualise alors en fonction de cette nouvelle affectation et en tenant compte également de l'interruption de l'exécution de requête(s), l'état des capacités courantes disponibles de chaque type pour chacune de ces ressources virtuelles 18.

Dans un mode de réalisation, lorsque l'orchestrateur 10 a reçu plusieurs nouvelles requêtes et que les ressources virtuelles 18 disponibles ne sont pas suffisantes pour satisfaire toutes ces nouvelles requêtes en attente d'affectation, l'orchestrateur 10 réaffecte en priorité des ressources virtuelles préemptées à celle(s) desdites ressources virtuelles associée(s) à la valeur de priorité la plus grande.

Dans un mode de réalisation, lorsque l'orchestrateur 10 a reçu plusieurs nouvelles requêtes, il effectue l'affectation des ressources virtuelles 18 aux requêtes en commençant par servir les ressources virtuelles associées au niveau de priorité supérieur et en poursuivant selon le sens descendant de niveau de priorité.

Dans un mode de réalisation, lorsque l'orchestrateur 10 a déterminé pour plusieurs nouvelles requêtes Req1 en demandant plusieurs ressources virtuelles Rv1 associées à un même niveau de priorité Pₙₒᵤᵥ que les ressources virtuelles indiquées dans les requêtes ne sont pas disponibles pour être affectées à la mise en œuvre de toutes ces requêtes Req1, et si préempter les ressources virtuelles alors affectées à l'ensemble des requêtes associées chacune à un niveau de priorité strictement inférieur à Pₙₒᵤᵥ ne permet pas de répondre à la totalité desdites nouvelles requêtes, l'orchestrateur 10 sélectionne celle(s) des requêtes Req1 auxquelles réaffecter les ressources virtuelles préemptées qui permet de maximiser le nombre de nouvelles requêtes Req1 telles que l'orchestrateur peut faire exécuter les opérations indiquées dans lesdites requêtes.

Dans un mode de réalisation, l'orchestrateur 10 établit une liste ordonnée de ressources virtuelles (et les requêtes associées) à préempter, en fonction de critères relatifs à ces ressources virtuelles et/ou de critères relatifs aux requêtes en cours d'exécution sur les ressources physiques et/ou de critères relatifs aux entités ayant généré les nouvelles requêtes à satisfaire

Dans des modes de réalisation, les requêtes dont les opérations sont arrêtées suite à préemption sont sélectionnées de façon à minimiser l'impact opérationnel de cette préemption, par exemple évalué en termes de nombre de ressources virtuelles hébergées qui sont préemptées, de la durée du retour à l'état avant préemption une fois la capacité de ressources ajustée et/ou comme indiqué ci-dessous.

Ainsi, dans un mode de réalisation, lorsque l'orchestrateur 10 a déterminé, pour au moins une requête Req0 demandant des ressources virtuelles et associée à un niveau de priorité Pₙₒᵤᵥ, que les ressources virtuelles en capacités indiquées dans la requête ne sont actuellement pas disponibles, les ressources virtuelles préemptées pour réaffectation à l'étape 102 à la requête Req0 sont sélectionnées par l'orchestrateur 10 de manière à minimiser le nombre de requêtes indiquant des opérations interrompues du fait de cette préemption.

Ou encore, dans un mode de réalisation, lorsque l'orchestrateur 10 a déterminé, pour au moins une requête Req0 associée à un niveau de priorité Pₙₒᵤᵥ, que les ressources virtuelles en capacités indiquées dans la requête ne sont actuellement pas disponibles, les ressources virtuelles préemptées pour réaffectation à l'étape 102 à la requête Req0 sont sélectionnées par l'orchestrateur 10 de manière à préempter en priorité celles utilisées pour donner suite à des requêtes de niveau de priorité les plus bas.

Dans un mode de réalisation, quand l'orchestrateur 10 détermine qu'un seuil prédéterminé d'occupation d'une ressource virtuelle est dépassé, l'orchestrateur ne traite alors plus l'affectation de ressource virtuelle de tel type à une nouvelle requête par la mise en œuvre de l'étape 101 et/ou 102 que si le niveau de priorité associé à la requête est supérieur à un niveau de priorité prédéterminé (par exemple configurable), strictement supérieur au niveau de priorité minimum PN.

Par ailleurs, dans des modes de réalisation, lors de la sélection de ressources virtuelles à affecter à des requêtes, dans l'étape 101 et/ou l'étape 102 l'orchestrateur 10 applique en outre des règles permettant de déterminer si une ressource virtuelle 18 est effectivement sélectionnable, outre une capacité suffisante et un type qui convient : par exemple sont prises en compte les caractéristiques d'affinité (permettant d'attribuer si possible une seule ressource physique matérielle à un même type de ressource virtuelle demandée) et/ou d'anti-affinité (permettant d'attribuer des ressources physiques matérielles distinctes à un même type de ressource virtuelle demandée, pour assurer une résilience en cas de panne et isoler des applications critiques (en terme d'exécution ou de sécurité) d'autres applications moins critiques), de taux d'utilisation de la ressource virtuelle, d'un groupe administratif dont fait partie la ressource virtuelle, du nombre d'échecs des traitements confiés à la ressource virtuelle, de caractéristiques matérielles de la ressource physique à laquelle correspond la ressource virtuelle... S'il reste plusieurs ressources virtuelles sélectionnables, l'orchestrateur peut sélectionner une ressource virtuelle en fonction d'un poids relatif affecté à chacune des ressources physiques auxquelles les ressources virtuelles correspondent en fonction de leur charge courante. Ces poids relatifs sont normalisés pour considérer l'hétérogénéité des ressources physiques.

A noter que selon les modes de réalisation, ce qui est entendu par « disponible » dans l'étape 101 et/ou l'étape 102 est, par exemple :
- disponible pour utilisation immédiate, ou
- disponible pour utilisation au plus tard dans un délai T0 (avec par exemple T0 dans la plage 0-1 s; ou
- non affectée à la mise en œuvre d'opérations requises dans des requêtes reçues ;
- non affectée à des opérations d'autres requêtes de priorité égale ou supérieure à celle de la requête Req0.

A noter que selon les modes de réalisation, l'interruption de l'exécution d'une requête consécutive à une préemption de ressources par l'orchestrateur 10 est temporaire (i.e. l'orchestrateur 10 réaffecte des ressources suffisantes à la requête interrompue dès qu'elles sont disponibles) ou définitive (i.e. l'orchestrateur 10 met définitivement fin à l'exécution de l'opération telle que requise dans la requête correspondante et émet alors un message d'erreur à destination de l'entité ayant émis la requête).

Suivant les modes de réalisation, une requête indique, explicitement ou implicitement, un ou plusieurs éléments parmi : le niveau de priorité de la requête, types de ressources requises et capacité (maximale/minimale) requise pour chaque type tels que nécessaires pour la mise en œuvre de la requête, au moins une opération telle qu'un logiciel/système d'exploitation/programme applicatif à exécuter correspondant à la ressource requise, des données d'entrée au programme applicatif le cas échéant ou une adresse en mémoire de ces données d'entrée, une adresse où stocker un résultat issu de l'exécution du programme applicatif etc.

Selon l'invention, une requête ne peut donner lieu à préemption et à interruption correspondante d'une ressource déjà affectée à une autre requête que si cette dernière est d'un niveau de priorité strictement inférieur à celui de la première.

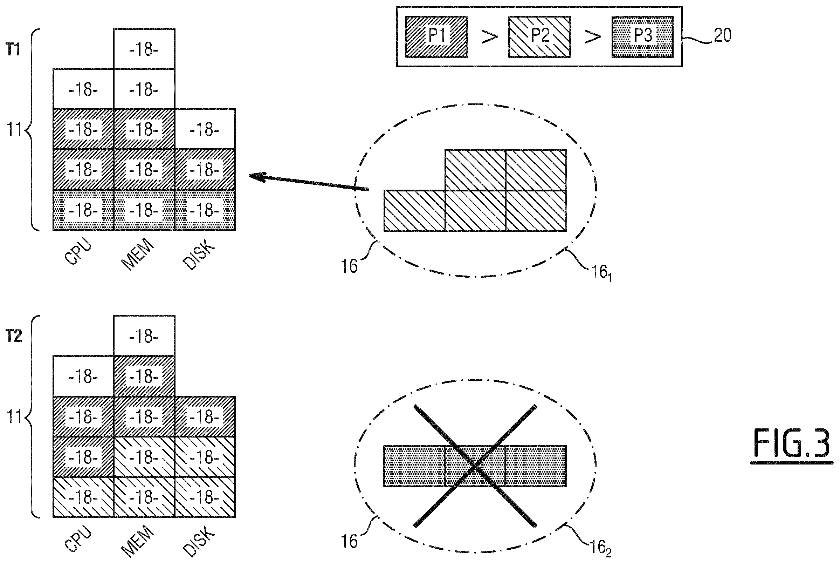

La figure 3 illustre un traitement opéré suite à la réception au temps T1 par l'orchestrateur 10 de requêtes 16 du système informatique 1 de la figure 1 dans un mode de réalisation de l'invention.

Au temps T1, quand le processus 100 est mis en œuvre par l'orchestrateur 10, l'ensemble 12 de ressources virtuelles se trouve dans l'état courant suivant :
- trois briques 18, de capacité unitaire de type CPU (sur une capacité maximum de CPU de quatre briques 18, ce qui laisse une brique CPU disponible), sont utilisées : une brique CPU 18 dédiée à une opération requise par une requête associée au niveau de priorité P3 et deux briques 18 dédiées à une opération requise par une requête associée au niveau de priorité P1 ;
- trois briques, de capacité unitaire de type mémoire (sur une capacité maximum de mémoire de cinq briques, ce qui laisse deux briques mémoire disponibles), sont utilisées : une brique mémoire 18 dédiée à une opération requise par une requête associée au niveau de priorité P3 et deux briques 18 dédiées à une opération requise par une requête associée au niveau de priorité P1 ;
- deux briques, de capacité unitaire de type stockage de masse (intitulée DISK sur la figure 3) (sur une capacité maximum de stockage de masse de trois briques, ce qui laisse une brique stockage de masse disponible), sont utilisées : une brique 18 de stockage de masse dédiée à une opération requise par une requête associée au niveau de priorité P3 et une brique 18 dédiée à une opération requise par une requête associée au niveau de priorité P1.

Sur la figure 3, les briques affectées à un niveau de priorité P1 sont représentées en hachuré serré, les briques affectées à un niveau de priorité P2 sont représentées en hachuré plus clairsemé, les briques affectées à un niveau de priorité P3 sont représentées en pointillé.

La requête de ressources virtuelles 16₁ indique à l'orchestrateur 10 un besoin d'une brique unitaire 18 de type CPU, de deux briques unitaires 18 de type mémoire et de deux briques unitaires 18 de type stockage de masse. La requête16₁ est associée à un niveau de priorité P2.

Pour rappel, le niveau de priorité P1 est supérieur au niveau de priorité P2, qui lui-même est supérieur au niveau de priorité P3.

L'orchestrateur 10 détermine que l'ensemble 12 ne dispose pas des ressources nécessaires pour répondre à la requête 16₁ (il manque une brique DISK). Il n'y a qu'une requête en cours d'exécution de priorité (P3) inférieure à P2 et celle-ci utilise effectivement une brique DISK qui permettrait à l'ensemble 12 de ressources virtuelles, une fois cette brique DISK ajoutée aux ressources virtuelles disponibles, d'héberger la requête16₁. Par conséquent, l'orchestrateur 10 préempte donc, au temps T2, les ressources virtuelles affectées à l'opération relative à cette requête de priorité P3, repérée par la référence 16₂, rendant ainsi disponibles une brique unitaire de chaque type (CPU, mémoire, DISK), puis il affecte les ressources virtuelles requises par la requête 16₁, i.e. une brique unitaire 18 de type CPU, deux briques unitaires 18 de type mémoire et deux briques unitaires 18 de type stockage de masse.

Selon l'invention, si la préemption de ressources virtuelles associées à la requête 16₂ de priorité P3 n'est pas suffisante pour héberger la requête 16₁ de priorité P2 et ses capacités en ressources virtuelles demandées (ex. la requête 16₁ demande trois briques de type DISK), cette dernière n'est pas acceptée par l'orchestrateur 10 et la requête 16₂ n'est pas préemptée et reste en exécution.

La présente invention permet ainsi d'optimiser l'utilisation de ressources, de garantir un temps de réponse (prédictible et borné) à une demande de mise en œuvre d'une ressource pour réaliser une opération, au travers d'une heuristique, et de préempter des ressources (et donc en interrompant l'exécution de requêtes) de façon ordonnée et contrôlée en réduisant en outre l'occurrence d'erreurs humaines. Le procédé selon l'invention peut comporter dans des modes de réalisation par exemple les étapes suivantes dans l'étape 102 :
a) Classer les requêtes entrantes et déjà en exécution selon leur niveau descendant de priorité,
b) Considérer l'index maximum de priorité *Pₖ = P_{MAX} = P1,*
c) Construire le sous-ensemble des requêtes *Hₖ* contenant seulement les requêtes ayant priorité *Pₖ*,
c1) Associer à chaque type de ressource (par exemple CPU, mémoire, disque, ...) une mesure de pertinence : par exemple, sont prises en compte pour le calcul le nombre de requêtes d'utilisation de la ressource avec *Pₖ*, sa disponibilité actuelle et attendue dans le futur, son poids relatif et importance...,
c2) Associer à chaque requête en *Hₖ* une mesure d'efficacité qui tient en compte des demandes en ressources de la requête elle-même et des mesures de pertinence pour chaque ressource calculés auparavant,
d) Itérer les requêtes dans *Hₖ* classées en ordre descendant d'efficacité :
   - Si la requête peut être exécutée avec les ressources disponibles :
      o Mettre à jour la liste des requêtes à exécuter avec la requête;
      o Mettre à jour la liste des ressources disponibles;
      o Passer à la requête suivante dans *Hₖ*;
   - Si la requête ne peut pas être exécutée avec les ressources disponibles :
      o Passer à la requête suivante dans *Hₖ*;
   - Quand toutes les requêtes en *Hₖ* ont été évaluées, passer à la prochaine étape e),
e) Si *Pₖ = P_{MIN},* toutes les requêtes ont été évaluées et la liste des requêtes à exécuter est alors prête à être passé à l'étape 103 :
   - Si *Pₖ > P_{MIN},*
      o Considérer l'index Pₖ avec Pₖ = Pₖ -1 et retourner à l'étape c).

Dans un autre mode de réalisation, l'orchestrateur est réalisé sous forme d'un composant logique programmable, tel qu'un FPGA (de l'anglais *Field Programmable Gate Array*)*,* ou encore sous forme d'un circuit intégré dédié, tel qu'un ASIC (de l'anglais *Applications Specific Integrated Circuit*)*.*

Dans un mode de réalisation, le système informatique 1 mettant en œuvre l'invention ne comporte pas d'étage de virtualisation des ressources physiques (ensemble 12) ; les ressources affectées par l'orchestrateur 10 sont alors directement les ressources physiques et non des ressources virtuelles.

Dans le mode de réalisation considéré, le système informatique 1 est un système de traitement de données qui est intégré dans un réseau de télécommunications ou un système d'information hébergé dans une infrastructure virtualisée.

On notera que des requêtes peuvent être émises par des entités, par exemple des administrateurs du système 1 utilisant des logiciels d'exploitation système ou l'orchestrateur 10, à destination du module de contrôle 10 en vue de l'attribution de ressources, à plusieurs stades, notamment dans les cas indiqués ci-dessous.

L'orchestrateur 10 peut modéliser les différentes étapes de création d'une opération logicielle avec la définition des ressources requises. La requête correspond aux exigences qui s'appliquent sur les ressources pour supporter cette opération logicielle.

Une requête peut être générée par l'orchestrateur 10 en vue de l'attribution de ressources après création, dès détection de congestion dans le système informatique 1 par l'orchestrateur: l'orchestrateur dispose d'un module d'automatisation de la décision qui est configuré pour exécuter une action corrective en cas de congestion. L'orchestrateur détermine les opérations logicielles qui sont affectées par cette congestion :
- La requête de l'opération logicielle de plus haute priorité affectée par la congestion est considérée comme Req0 dans l'étape 101 et l'étape 102 ;
- L'ensemble des ressources actuellement affectées à Req0 constitue les ressources requises ;
- L'action corrective déclenche un traitement opéré par l'orchestrateur 10 quand les ressources en capacités indiquées dans la requête ne sont actuellement pas disponibles.
Dans un autre cas, une entité peut demander des ressources supplémentaires pour une opération logicielle déjà créée en générant une requête:
- Elle est considérée comme Req0 dans l'étape 101 et l'étape 102;
- La requête correspond à la demande de ressources supplémentaires;
- Les ressources supplémentaires représentent les ressources requises.

On notera que différents modes de réalisation tels qu'exposés ci-dessus sont combinables entre eux, pour peu qu'ils ne soient pas incompatibles.

## Revendications

1. Procédé d'affectation de ressources (12, 13) en réponse à des requêtes reçues (16) dans un système informatique (1) comprenant un ensemble (11) de ressources et un bloc (10) de contrôle d'affectation, ledit procédé comprenant les étapes suivantes mises en œuvre par le bloc de contrôle d'affectation :
- réception de requêtes (16) indiquant chacune une opération logicielle à mettre en œuvre et au moins des capacités de ressources sélectivement de type CPU, mémoire de travail, stockage de masse nécessaires à la mise en œuvre de ladite opération ;
- pour chaque requête reçue, détermination de si des ressources en capacité suffisante sont disponibles dans l'ensemble (11) de ressources pour être affectées à la mise en œuvre de ladite opération logicielle et dans le cas positif, affectation desdites ressources à la mise en œuvre de ladite opération ;
- chaque requête est associée à une valeur de priorité parmi plusieurs valeurs de priorité ordonnées entre elles ;
- dans le cas négatif où il a été déterminé, relativement à une première requête, que des ressources en capacité suffisante ne sont pas disponibles, préemption de ressources alors précédemment affectées à la mise en œuvre d'une opération indiquée dans une deuxième requête associée à une valeur de priorité strictement inférieure à la valeur de priorité associée à la première requête ; et
- réaffectation d'une partie au moins desdites ressources ainsi préemptées à la mise en œuvre de l'opération indiquée dans la première requête ;
ledit procédé étant **caractérisé en ce qu'**il comprend les étapes suivantes mises en oeuvre par le bloc de contrôle d'affectation :
- lorsqu'il a été déterminé pour plusieurs premières requêtes (16) associées à une même première valeur de priorité que les capacités de ressources indiquées dans lesdites premières requêtes ne sont pas disponibles, et si les ressources alors affectées aux opérations indiquées dans des deuxièmes requêtes associées chacune à une valeur de priorité strictement inférieure à ladite première valeur de priorité ne permettent pas de mettre en œuvre la totalité des opérations indiquées dans lesdites premières requêtes, le bloc (10) de contrôle d'affectation sélectionne celle(s) des premières requêtes auxquelles réaffecter lesdites ressources permettant de maximiser le nombre des requêtes qui seront satisfaites par affectation de ressources disponibles ou réaffectation de ressources préemptées.

2. Procédé d'affectation de ressources (12,13) selon la revendication 1, selon lequel, lorsqu'il a été déterminé pour plusieurs premières requêtes (16) que les capacités de ressources indiquées dans les premières requêtes ne sont pas disponibles, le bloc (10) de contrôle d'affectation réaffecte en priorité des ressources aux opérations indiquées dans celle(s) des premières requêtes associée(s) à la valeur de priorité la plus grande parmi les valeurs de priorité associées audites premières requêtes.

3. Procédé d'affectation de ressources selon l'une des revendications précédentes, selon lequel, lorsqu'il a été déterminé pour au moins une première requête (16) associée à une première valeur de priorité que les capacités de ressources (12,13) indiquées dans l'au moins une première requête ne sont pas disponibles, les ressources antérieurement affectées à la mise en œuvre d'opérations indiquées dans des deuxièmes requêtes et préemptées pour réaffectation à la mise en œuvre de l'opération indiquée dans ladite première requête sont sélectionnées par le bloc (10) de contrôle d'affectation de manière à minimiser le nombre desdites deuxièmes requêtes indiquant lesdites opérations.

4. Programme d'ordinateur comportant des instructions logicielles qui, lorsqu'elles sont exécutées par un ordinateur, mettent en œuvre un procédé selon l'une quelconque des revendications précédentes.

5. Dispositif (10) de contrôle d'affectation de ressources (12, 13) en réponse à des requêtes reçues (16) dans un système informatique (1) comprenant un ensemble (11) de ressources ledit dispositif étant adapté pour recevoir des requêtes (16) indiquant chacune une opération logicielle à mettre en œuvre et au moins des capacités de ressources sélectivement de type CPU, mémoire de travail, stockage de masse nécessaires à la mise en œuvre de ladite opération ;
pour chaque requête reçue, ledit dispositif (10) est adapté pour déterminer si des ressources en capacité suffisante sont disponibles dans l'ensemble (11) de ressources pour être affectées à la mise en œuvre de ladite opération logicielle et dans le cas positif, pour affecter lesdites ressources à la mise en œuvre de ladite opération ;
ledit dispositif étant adapté pour que, chaque requête étant associée à une valeur de priorité parmi plusieurs valeurs de priorité ordonnées entre elles, dans le cas négatif où le dispositif a déterminé, relativement à une première requête, que des ressources en capacité suffisante ne sont pas disponibles, il est adapté pour préempter des ressources alors précédemment affectées à la mise en œuvre d'une opération indiquée dans une deuxième requête associée à une valeur de priorité strictement inférieure à la valeur de priorité associée à la première requête, et pour réaffecter une partie au moins desdites des ressources ainsi préemptées à la mise en œuvre de l'opération indiquée dans la première requête ;
ledit dispositif étant **caractérisé en ce que**, lorsqu'il a déterminé pour plusieurs premières requêtes (16) associées à une même première valeur de priorité que les capacités de ressources indiquées dans lesdites premières requêtes ne sont pas disponibles, et si les ressources alors affectées aux opérations indiquées dans des deuxièmes requêtes associées chacune à une valeur de priorité strictement inférieure à ladite première valeur de priorité ne permettent pas de mettre en œuvre la totalité des opérations indiquées dans lesdites premières requêtes, sélectionner celle(s) des premières requêtes auxquelles réaffecter lesdites ressources permettant de maximiser le nombre des requêtes qui seront satisfaites par affectation de ressources disponibles ou réaffectation de ressources préemptées.

6. Dispositif (10) de contrôle d'affectation selon la revendication 5, adapté pour, lorsqu'il a déterminé pour plusieurs premières requêtes (16) que les capacités de ressources indiquées dans les premières requêtes ne sont pas disponibles, réaffecter en priorité des ressources aux opérations indiquées dans celle(s) des premières requêtes associée(s) à la valeur de priorité la plus grande parmi les valeurs de priorité associées audites premières requêtes.

7. Dispositif de contrôle d'affectation selon l'une des revendications 5 à 6 adapté pour, lorsqu'il a déterminé pour au moins une première requête (16) associée à une première valeur de priorité que les capacités de ressources (12,13) indiquées dans l'au moins une première requête ne sont pas disponibles, sélectionner les ressources antérieurement affectées à la mise en œuvre d'opérations indiquées dans des deuxièmes requêtes et préemptées pour réaffectation à la mise en œuvre de l'opération indiquée dans ladite première requête de manière à minimiser le nombre desdites deuxièmes requêtes indiquant lesdites opérations.

8. Système informatique (1) comprenant un ensemble (11) de ressources (12, 13) et un dispositif de contrôle d'affectation (10) selon l'une des revendications 5 à 7.

## Patentansprüche

1. Verfahren zum Zuweisen von Ressourcen (12, 13) als Reaktion auf empfangene Anfragen (16) in einem Computersystem (1), umfassend einen Satz (11) von Ressourcen und einen Zuweisungssteuerungsblock (10), das Verfahren umfassend die folgenden Schritte, die von dem Zuweisungssteuerungsblock durchgeführt werden:
- Empfangen von Anfragen (16), die jeweils einen durchzuführenden Softwarevorgang und zumindest Kapazitäten von Ressourcen selektiv vom Typ CPU, Arbeitsspeicher, Massenspeicher angeben, die für die Durchführung des Vorgangs erforderlich sind;
- für jede empfangene Anfrage, Bestimmen, ob Ressourcen mit ausreichender Kapazität im Satz (11) von Ressourcen verfügbar sind, um zur Durchführung des Softwarevorgang zugewiesen zu werden, und wenn ja, Zuweisen der Ressourcen zur Durchführung des Vorgangs;
- wobei jede Anfrage mit einem Prioritätswert aus mehreren untereinander geordneten Prioritätswerten assoziiert ist;
- im negativen Fall, in dem in Bezug auf eine erste Anfrage bestimmt wurde, dass keine Ressourcen mit ausreichender Kapazität verfügbar sind, Vorbelegung von Ressourcen, die dann zuvor für die Durchführung eines Vorgangs zugewiesen sind, die in einer zweiten Anfrage angegeben ist, die mit einem Prioritätswert assoziiert ist, der strikt unter dem Prioritätswert ist, der mit der ersten Anfrage assoziiert ist; und
- Neuzuweisung mindestens eines Teils der vorbelegten Ressourcen zur Durchführung des in der ersten Anfrage angegebenen Vorgangs;
wobei das Verfahren **dadurch gekennzeichnet ist, dass** es die folgenden Schritte umfasst, die von dem Zuweisungssteuerungsblock durchgeführt werden:
- wenn
für mehrere erste Anfragen (16), die mit demselben ersten Prioritätswert assoziiert sind, bestimmt wurde, dass die in den ersten Anfragen angegebenen Ressourcenkapazitäten nicht verfügbar sind, und wenn die Ressourcen, die dann den Vorgängen zugewiesen werden, die in zweiten Anfragen angegeben sind, die jeweils mit einem Prioritätswert assoziiert sind, der strikt niedriger ist als der erste Prioritätswert, es nicht erlauben, die Gesamtheit der Vorgänge durchzuführen, die in den ersten Anfragen angegeben sind, wählt der Zuweisungssteuerungsblock (10) jene der ersten Anfragen, der die Ressourcen neu zugewiesen werden sollen, um die Anzahl der Anfragen zu maximieren, die durch Zuweisung verfügbarer Ressourcen oder Neuzuweisung vorbelegter Ressourcen erfüllt werden.

2. Verfahren zur Zuweisung von Ressourcen (12, 13) nach Anspruch 1, wobei, wenn für mehrere erste Anfragen (16) bestimmt wurde, dass die in den ersten Anfragen angegebenen Ressourcenkapazitäten nicht verfügbar sind, der Zuweisungssteuerblock (10) Ressourcen vorrangig den Vorgängen neu zuweist, die in der/den ersten Anfrage(n) angegeben sind, die mit dem höchsten Prioritätswert unter den Prioritätswerten assoziiert ist/sind, die mit den ersten Anfragen assoziiert sind.

3. Verfahren zur Zuweisung von Ressourcen nach einem der vorhergehenden Ansprüche, wobei, wenn für mindestens eine erste Anfrage (16), die mit einem ersten Prioritätswert assoziiert ist, bestimmt wurde, dass die in der mindestens einen ersten Anfrage angegebenen Ressourcenkapazitäten (12, 13) nicht verfügbar sind, die Ressourcen, die zuvor der Durchführung von Vorgängen zugewiesen waren, die in zweiten Anfragen angegeben sind, und die für eine Neuzuweisung zur Durchführung des in der ersten Anfrage angegebenen Vorgangs vorbelegt sind, durch den Zuweisungssteuerungsblock (10) ausgewählt werden, sodass die Anzahl der zweiten Anfragen, die die Vorgänge angeben, minimiert wird.

4. Rechnerprogramm, umfassend Softwareanweisungen, die, wenn sie von einem Rechner ausgeführt werden, ein Verfahren nach einem der vorhergehenden Ansprüche durchführen.

5. Vorrichtung (10) zur Steuerung der Zuweisung von Ressourcen (12, 13) als Reaktion auf empfangene Anfragen (16) in einem Computersystem (1), umfassend einen Satz (11) von Ressourcen,
wobei die Vorrichtung angepasst ist, um
Anfragen (16) zu empfangen, die jeweils einen durchzuführenden Softwarevorgang und zumindest Kapazitäten von Ressourcen selektiv vom Typ CPU, Arbeitsspeicher, Massenspeicher angeben, die für die Durchführung des Vorgangs erforderlich sind;
wobei die Vorrichtung (10) für jede empfangene Anfrage angepasst ist, um zu bestimmen, ob Ressourcen mit ausreichender Kapazität in dem Satz (11) von Ressourcen verfügbar sind, um der Durchführung des Softwarevorgangs zugewiesen zu werden, und im positiven Fall die Ressourcen der Durchführung des Vorgangs zuzuweisen;
wobei die Vorrichtung angepasst ist,
damit jede Anfrage mit einem
Prioritätswert aus mehreren untereinander geordneten Prioritätswerten assoziiert wird, und für den Fall, dass die Vorrichtung in Bezug auf eine erste Anfrage bestimmt hat, dass keine ausreichenden Ressourcenkapazitäten verfügbar sind, Ressourcen, die zuvor für die Ausführung eines in einer zweiten Anforderung angegebenen Vorgangs zugewiesen waren, der mit einem Prioritätswert assoziiert ist, der strikt niedriger ist als der Prioritätswert, der mit der ersten Anfrage assoziiert ist, vorzeitig zu belegen und mindestens einen Teil der so vorzeitig belegten Ressourcen für die Durchführung des in der ersten Anfrage angegebenen Vorgangs neu zuzuweisen;
wobei die Vorrichtung **dadurch gekennzeichnet ist, dass**,
wenn sie für mehrere erste Anfragen
(16), die mit demselben ersten Prioritätswert assoziiert sind, bestimmt hat, dass die in den ersten Anfragen angegebenen Ressourcenkapazitäten nicht verfügbar sind, und wenn die Ressourcen, die dann den Vorgängen zugewiesen werden, die in zweiten Anfragen angegeben sind, die jeweils mit einem Prioritätswert assoziiert sind, der strikt niedriger ist als der erste Prioritätswert, es nicht erlauben, die Gesamtheit der Vorgänge durchzuführen, die in den ersten Anfragen angegeben sind, jene der ersten Anfragen auswählt, der die Ressourcen neu zugewiesen werden sollen, um die Anzahl der Anfragen zu maximieren, die durch Zuweisung verfügbarer Ressourcen oder Neuzuweisung vorbelegter Ressourcen erfüllt werden.

6. Vorrichtung (10) zur Steuerung der Zuweisung nach Anspruch 5, die angepasst ist,
um, wenn sie für mehrere erste Anfragen (16) bestimmt hat, dass die in den ersten Anfragen angegebenen Ressourcenkapazitäten nicht verfügbar sind, vorrangig den Vorgängen Ressourcen neu zuzuweisen, die in der/die ersten Anfrage(n) angegeben sind, die mit dem höchsten Prioritätswert unter den Prioritätswerten assoziiert ist/sind, die mit den ersten Anfragen assoziiert sind.

7. Vorrichtung zur Steuerung der Zuweisung nach einem der Ansprüche 5 bis 6, die angepasst ist, um, wenn sie für mindestens eine erste Anfrage (16), die mit einem ersten Prioritätswert assoziiert ist, bestimmt hat, dass die Ressourcenkapazitäten (12, 13), die in der mindestens einen ersten Anfrage angegeben sind, nicht verfügbar sind, die Ressourcen auszuwählen, die zuvor der Durchführung von Vorgängen zugewiesen waren, die in zweiten Anfragen angegeben sind, und die für eine Neuzuweisung zur Durchführung des in der ersten Anfrage angegebenen Vorgangs vorbelegt sind, sodass die Anzahl der zweiten Anfragen, die die Vorgänge angeben, minimiert wird.

8. Computersystem (1), umfassend einen Satz (11) von Ressourcen (12, 13) und eine Zuweisungssteuerungsvorrichtung (10) nach einem der Ansprüche 5 bis 7.

## Claims

1. A method for allocating resources (12, 13) in response to received requests (16) in a computer system (1) comprising a set (11) of resources and an allocation control block (10), said method comprising the following steps implemented by the allocation control block:
- receiving requests (16) each indicating a software operation to be implemented and at least the resource capacities selectively chosen of the CPU, working memory, or mass storage type, that are required to implement the said operation;
- for each request received, determining whether resources of sufficient capacity are available in the set (11) of resources to be allocated to the implementation of said software operation and, if so, allocating said resources to the implementation of said operation;
- each request is associated with one of a plurality of priority values ordered relative to one another;
- in the negative case where it has been determined, in relation to a first request, that resources in sufficient capacity are not available, pre-empting resources which had theretofore been allocated to implementing an operation indicated in a second request associated with a priority value strictly lower than the priority value associated with the first request; and
- reallocating at least part of the said resources thus pre-empted to the implementation of the operation indicated in the first request;
said method being **characterised in that** it comprises the following steps implemented by the allocation control block:
- when it
has been determined for a plurality of first requests (16) associated with the same first priority value that the resource capacities indicated in said first requests are not available, and if the resources then allocated to the operations indicated in second requests each associated with a priority value strictly lower than said first priority value do not enable all of the operations indicated in said first requests to be implemented, the allocation control block (10) selects whichever of the first requests said resources are to be reallocated to in order to maximise the number of requests that will be satisfied by allocating available resources or reallocating pre-empted resources.

2. The method for allocating resources (12, 13) according to claim 1, whereby, when it has been determined for a plurality of first requests (16) that the resource capacities indicated in the first requests are not available, the allocation control block (10) reallocates, as a priority, resources to the operations indicated in whichever of the first requests is/are associated with the highest priority value among the priority values associated with said first requests.

3. The method for allocating resources according to one of the preceding claims, whereby, when it has been determined for at least one first request (16) associated with a first priority value that the resource capacities (12, 13) indicated in the at least one first request are not available, the resources previously allocated to the implementation of operations indicated in second requests and pre-empted for reallocation to the implementation of the operation indicated in said first request are selected by the allocation control block (10) so as to minimise the number of said second requests indicating said operations.

4. A computer program comprising software instructions which, when executed by a computer, implement a method according to any one of the preceding claims.

5. A device (10) for controlling the allocation of resources (12, 13) in response to requests (16) received in a computer system (1) comprising a set (11) of resources said device being adapted to receive
requests (16) each indicating a software operation to be implemented and at least the resource capacities selectively chosen of the CPU, working memory, or mass storage type, that are required to implement the said operation;
for each request received, said device (10) is adapted to determine whether resources of sufficient capacity are available in the set (11) of resources to be allocated to the implementation of said software operation and, if so, to allocate said resources to the implementation of said operation;
said device being adapted so
that, each request being associated with a
priority value out of a plurality of ordered priority values, in the negative case where the device has determined, in relation to a first request, that resources in sufficient capacity are not available, it is adapted to pre-empt resources which had theretofore been allocated to implementing an operation indicated in a second request associated with a priority value strictly lower than the priority value associated with the first request; and to reallocate at least part of the said resources thus pre-empted to the implementation of the operation indicated in the first request;
said device being **characterised in that**,
when it has determined for a plurality of first
requests (16) associated with the same first priority value that the resource capacities indicated in said first requests are not available, and if the resources then allocated to the operations indicated in second requests each associated with a priority value strictly lower than said first priority value do not enable all of the operations indicated in said first requests to be implemented, selecting whichever of the first requests said resources are to be reallocated to in order to maximise the number of requests that will be satisfied by allocating available resources or reallocating pre-empted resources.

6. The allocation control device (10) according to claim 5, adapted
to, when it has determined for a plurality of first requests (16) that the resource capacities indicated in the first requests are not available, to reallocate, as a priority, resources to the operations indicated in whichever of the first requests is/are associated with the highest priority value among the priority values associated with said first requests.

7. The allocation control device according to any of claims 5 to 6,
adapted to, when it has been determined for at least one first request (16) associated with a first priority value that the resource capacities (12, 13) indicated in the at least one first request are not available, select the resources previously allocated to the implementation of operations indicated in second requests and pre-empted for reallocation to the implementation of the operation indicated in said first request so as to minimise the number of said second requests indicating said operations.

8. A computer system (1) comprising a set (11) of resources (12, 13) and an allocation control device (10) according to one of claims 5 to 7.
